# EUROPÄISCHE PATENTANMELDUNG

(11) **EP 1 566 253 A2**
(43) Veröffentlichungstag der Anmeldung: **24.08.2005**
(21) Anmeldenummer: 05002677.2
(22) Anmeldetag: 09.02.2005
(51) Int. Cl.: B29C 44/12, B29C 44/34

(54) **Schäumwerkzeug und Verfahren zum Schäumen von Bauteilen**

(30) Priorität: 20.02.2004 DE 102004008412
(71) Anmelder: ArvinMeritor GmbH, 63128 Dietzenbach (DE)
(72) Erfinder: Biewer, Christian, 64839 Münster-Altheim (DE); Schönebeck, Horst, 63571 Gelnhausen (DE)
(74) Vertreter: Kitzhofer, Thomas

(57) **Zusammenfassung**

Ein Schäumwerkzeug mit einem Unter- und einem Oberteil (16, 18), zwischen denen ein Schäumhohlraum (20) gebildet ist, hat innenseitig an dem Unterund/oder dem Oberteil (16, 18) eine den Schäumhohlraum (20) begrenzende, flächige Membran (22) angebracht, die beim Schäumvorgang Gas zu Gasaustrittsöffnungen (34) transportiert. Mittels des Schäumwerkzeugs werden insbesondere Karosserieanbauteile hinterschäumt.

## Beschreibung

Die Erfindung betrifft ein Schäumwerkzeug, mit einem Unterteil und einem Oberteil, zwischen denen ein Schäumhohlraum gebildet ist.

Darüber hinaus betrifft die Erfindung ein Verfahren zum Schäumen von Bauteilen, insbesondere zum Hinterschäumen eines Fahrzeugkarosserieanbauteils. Fahrzeugkarosserieanbauteile sind solche Teile, die bei fertigmontiertem Fahrzeug zumindest Abschnitte der Außenhaut des Fahrzeugs definieren. Insbesondere betrifft die Erfindung ein Verfahren zum Herstellen eines Fahrzeugdachmoduls, also eines großflächigen, am Dachrahmen befestigten und die Dachhaut großteils bildenden Verbundbauteils.

Gerade beim Herstellen von Karosserieanbauteilen mittels Hinterschäumen werden hohe Anforderungen an die Oberflächenqualität gestellt. Dabei werden üblicherweise Folien, die die spätere Außenhaut definieren, mit PU-Material hinterschäumt. Beim Schäumprozeß entsteht durch den chemischen Reaktionsprozeß bedingt ein großes Ausgasungsvolumen. Dieses Gasvolumen sollte aus dem Schäumwerkzeug entweichen können, um gute Schäumergebnisse zu erzielen. Kann das Gas nur unzureichend oder überhaupt nicht entweichen, kommt es zu Lufteinschlüssen und Oberflächenfehlern.

Aufgabe der Erfindung ist es, ein Schäumwerkzeug sowie ein Verfahren zum Schäumen von Bauteilen, insbesondere zum Hinterschäumen eines Fahrzeugkarosserieanbauteils zu schaffen, das qualitativ bessere geschäumte Bauteile liefern kann.

Diese Aufgabe wird bei einem Schäumwerkzeug der eingangs genannten Art dadurch gelöst, daß am Unter- und/oder Oberteil innenseitig wenigstens eine den Schäumhohlraum begrenzende, flächige Membran angebracht ist, die außenseitig an einen Druckraum angrenzt.

Die Membran ist ein fester Bestandteil des Schäumwerkzeugs und kann sich aufgrund des hinter ihr liegenden Druckraums elastisch verformen, so daß sie das Volumen des Schäumhohlraums variabel macht. Dem Schäumdruck aufgrund des Gasaustriebs kann die Membran nachgeben. Das zusätzliche damit geschaffene Volumen wird dann zum Gasaustrieb genutzt. Das Gas wird somit nicht an diejenige spätere Außenfläche des geschäumten Bauteils wandern, die am nicht mit der Membran versehenen Abschnitt des Schäumwerkzeugs erzeugt wird.

Gerade beim Hinterschäumen von Folien, insbesondere tiefgezogenen Kunststoff- oder Aluminiumfolien für Dachmodule ergeben sich durch die Erfindung auf der Seite der Folie keine oder zumindest weniger Unregelmäßigkeiten oder Einfallstellen aufgrund des leichter frei werdenden Gases.

Der Außenraum kann wahlweise druckbeaufschlagbar sein. Damit ist es möglich, gezielt einen steuerbaren Gegendruck aufzubauen.

Insbesondere wird zu diesem Zweck eine Pumpe mit dem Druckraum gekoppelt.

Zwischen dem Unter- und dem Oberteil sind im Schäumwerkzeug Gasaustrittsöffnungen vorgesehen. Mittels der Pumpe kann die Membran nicht nur einen unterschiedlichen Gegendruck beim Ausgasen des eingebrachten Kunststoffs aufbringen. Durch gezieltes, z.B. periodisches Druckverändern kann die Membran selbst als Pumpe wirken, die das sich im Schäumhohlraum befindende Gas zu den Gasaustrittsöffnungen fördert.

Das erfindungsgemäße Verfahren zum Schäumen von Bauteilen, insbesondere zum Hinterschäumen eines Fahrzeugkarosseriebauteils, setzt das zuvor erläuterte erfindungsgemäße Schäumwerkzeug ein.

Beim Hinterschäumen wird gemäß der bevorzugten Ausführungsform eine zu hinterschäumende Folie in das Schäumwerkzeug eingelegt. Anschließend wird flüssiger Kunststoff, insbesondere PU-Material, auf die Folie aufgebracht. Das Werkzeug wird geschlossen, wobei der Kunststoff an der Membran anliegt. Die Folie liegt also nicht auf der Membran auf.

Wie bereits zuvor erläutert, wird die Membran außenseitig während des Ausgasens des flüssigen Kunststoffs druckbeaufschlagt, was zum gezielten Fördern des austretenden Gases genutzt werden kann.

Weitere Merkmale und Vorteile der Erfmdung ergeben sich aus der nachfolgenden Beschreibung und aus den nachfolgenden Zeichnungen, auf die Bezug genommen wird. In den Zeichnungen zeigen:
- Figur 1 eine perspektivische Draufsicht auf ein durch das erfindungsgemäße Schäumwerkzeug und das erfindungsgemäße Verfahren hergestellte Fahrzeugdachmodul,
- Figur 2 eine schematische Schnittansicht durch das erfindungsgemäße Schäumwerkzeug im geöffneten Zustand,
- Figur 3 das Schäumwerkzeug nach Figur 2 unmittelbar nach seinem Schließen, und
- Figur 4 das Schäumwerkzeug nach Figur 2 bei Druckerhöhung im Druckraum.

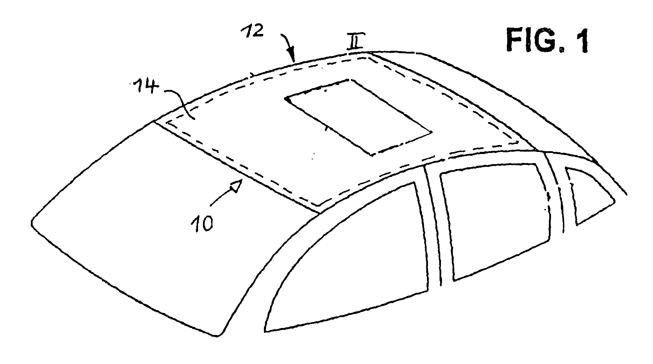

In Figur 1 ist ein Fahrzeugkarosserieanbauteil in Form eines Dachmoduls 10 dargestellt, das ein großflächiges Verbundbauteil ist und am Dachrahmen 12 mittels Kleben befestigt wird. Das Dachmodul 10 definiert die Außenhaut, vorliegend die Dachhaut des Fahrzeugs. Das Dachmodul 10 ist, wie gesagt, ein Verbundbauteil, wobei die Außenhaut durch eine Folie 14 gebildet ist, die als tiefgezogene, durchgefärbte Kunststoffolie oder Aluminiumfolie ausgeführt sein kann.

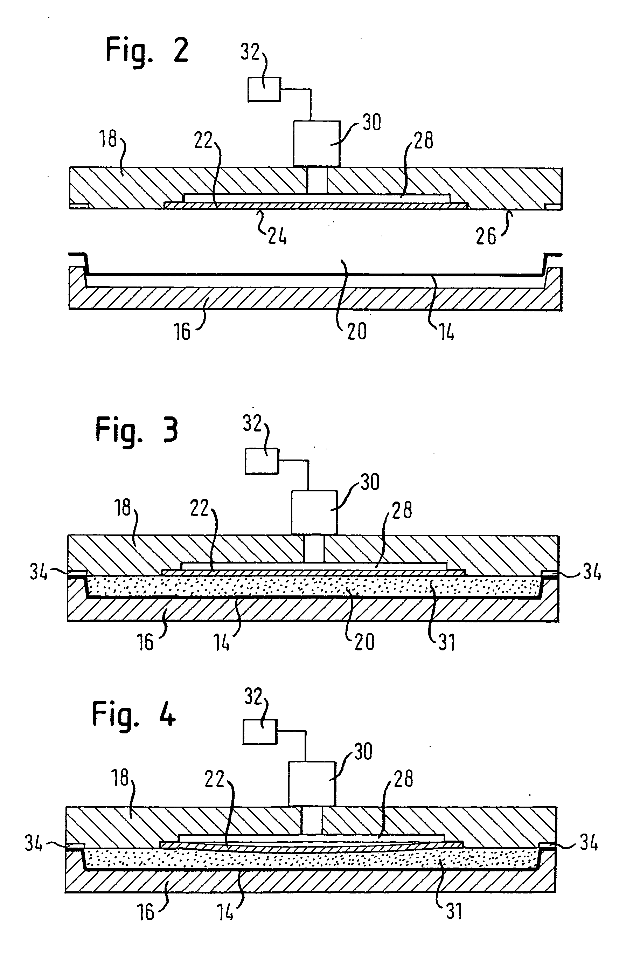

Die Herstellung des Dachmoduls erfolgt in dem in den Figuren 2 bis 4 dargestellten Schäumwerkzeug, das ein Unterteil 16 und ein Oberteil 18 aufweist, die auseinander und zusammengefahren werden können und im zusammengefahrenen Zustand einen Schäumhohlraum 20 innenseitig begrenzen. Das Unterteil weist eine wannenförmige Vertiefung auf, wogegen das Oberteil annähernd eben ist.

Im Oberteil 18 ist eine großflächige Membran 22 befestigt, die aus flexiblem Material ist. Die Membran 22 geht mit ihrer Innenseite 24 bündig in die Innenseite 26 des Oberteils 18 am Rand der Membran 22 über. Die Membran 22 ist randseitig am Oberteil 18 befestigt. Auf der Außenseite der Membran 22, also der dem Schäumhohlraum 20 entgegengesetzten Seite ist ein sich fast über die gesamte Fläche der Membran, ausgenommen deren Befestigungsrand, erstreckender Druckraum 28 vorgesehen, der eine relativ geringe Höhe aufweist. Dieser Druckraum 28 steht mit einer Pumpe 30 in Strömungsverbindung.

Der Druckraum 28 ist bei geschlossenem Schäumwerkzeug über die Membran 22 gasdicht vom Schäumhohlraum 20 getrennt.

Das Fahrzeugkarosserieanbauteil in Form des Dachmoduls 10 wird folgendermaßen hergestellt. Zuerst wird die tiefgezogene Folie 14 bei geöffnetem Schäumwerkzeug in das Unterteil 16 gelegt (Fig. 2). Anschließend wird rückseitig auf die Folie 14 flüssiger Kunststoff 31 in Form von PU aufgetragen.

Das Oberteil 18 wird auf das Unterteil 16 gefahren und das Schäumwerkzeug geschlossen (Figur 3). Es beginnt der sogenannte Gasaustrieb im PU-Material, was zu einer Volumenvergrößerung führt. Der Kunststoff 31 kommt in Kontakt mit der Membran 22. Die Gasblasen wandern nach oben zur Membran 22 und drücken diese nach oben (nicht gezeigt), so daß sie sich in Richtung Druckraum 28 durchbiegt. Damit wird verhindert, daß sich das Gas sehr stark in Richtung Folie 14 im Kunststoff 31 ausbreitet und dort für Fehlstellen sorgt.

Das Verfahren kann nach dem Gasaustrieb und dem Durchbiegen der Membran 22 beendet werden.

Ein weiterer Verfahrensschritt kann jedoch optional folgen, indem eine Steuerung 32 die Pumpe 30 ansteuert und diese den Druck im Druckraum 28 stark erhöht, bis sich die Membran 22 entgegen dem Schäumdruck nach unten durchbiegt (siehe Figur 4). Dadurch wird das Gas seitlich nach außen zu ohnehin vorgesehene Gasaustrittsöffnungen 34 zwischen Ober- und Unterteil 18, 16 gefördert. Aufgrund der beispielsweise periodisch angesteuerten Pumpe und der deshalb periodisch schwingenden Membran 22 kann eine Art Pumpen- oder Transportfunktion im Schäumhohlraum 20 für das freiwerdende Gas erzielt werden, so daß über die Gasaustrittsöffnungen 34 wesentlich mehr Gas nach außen transportiert wird als ohne die Pumpe 30.

Unabhängig davon, ob die Pumpe 30 eingesetzt wird oder nicht, verbessert sich aufgrund der Membran 22 die Oberflächenqualität der hinterschäumten Bauteile.

## Patentansprüche

1. Schäumwerkzeug, mit
einem Unterteil (16) und
einem Oberteil (18), zwischen denen ein Schäumhohlraum (20) gebildet ist,
**dadurch gekennzeichnet, daß**
am Unter- und/oder Oberteil (16, 18) innenseitig eine den Schäumhohlraum (20) begrenzende, flächige Membran (22) angebracht ist, die außenseitig an einen Druckraum (28) angrenzt.

2. Schäumwerkzeug nach Anspruch 1, **dadurch gekennzeichnet, daß** der Druckraum (28) wahlweise druckbeaufschlagbar ist.

3. Schäumwerkzeug nach einem der vorhergehenden Ansprüche, **dadurch gekennzeichnet, daß** der Druckraum (28) mit einer Pumpe (30) gekoppelt ist.

4. Schäumwerkzeug nach Anspruch 3, **dadurch gekennzeichnet, daß** eine mit der Pumpe (30) gekoppelte Steuerung (32) vorgesehen ist, die beim Ausgasen des eingebrachten Kunststoffs (31) den Druck auf der Außenseite erhöht.

5. Schäumwerkzeug nach einem der vorhergehenden Ansprüche, **dadurch gekennzeichnet, daß** zwischen Unter- und Oberteil (16, 18) Gasaustrittsöffnungen (34) vorgesehen sind.

6. Verfahren zum Schäumen von Bauteilen, insbesondere zum Hinterschäumen eines Fahrzeugkarosserieanbauteils, **dadurch gekennzeichnet, daß** ein Schäumwerkzeug nach einem der vorhergehenden Ansprüche verwendet wird.

7. Verfahren nach Anspruch 6, **dadurch gekennzeichnet, daß** eine zu hinterschäumende Folie (14) in das Schäumwerkzeug eingelegt und flüssiger Kunststoff (31) auf die Folie (14) rückseitig aufgebracht wird, wobei anschließend das Werkzeug geschlossen wird und der flüssige Kunststoff (31) die Membran (22) kontaktiert.

8. Verfahren nach Anspruch 7, **dadurch gekennzeichnet, daß** die Membran (22) außenseitig während des Ausgasens des flüssigen Kunststoffs (31) druckbeaufschlagt wird.

9. Verfahren nach einem der Ansprüche 6 bis 8, **dadurch gekennzeichnet, daß** die Membran (22) während des Ausgasens des flüssigen Kunststoffs (31) zur Erzeugung einer Pumpenwirkung mehrfach druckbeaufschlagt wird und das entweichende Gas in Richtung zu Gasaustrittsöffnungen (34) zwischen Unter- und Oberteil (16, 18) fördert.
